# EUROPEAN PATENT APPLICATION

(11) **EP 2 586 726 A2**
(43) Date of publication of application: **01.05.2013**
(21) Application number: 12190215.9
(22) Date of filing: 26.10.2012
(51) Int. Cl.: B65D 81/34, B32B 3/10, B32B 3/06, B32B 5/02, B32B 5/18, B32B 5/14, B32B 27/12, B32B 3/26

(54) **System and apparatus for a flexible moisture absorbent microwave package**

(30) Priority: 27.10.2011 US 201113283376
(71) Applicant: Mondi Jackson, Inc., Jackson, MO 63755 (US)
(72) Inventor: Hach, Maik, Cape Girardeau, MO 63701 (US)
(74) Representative: Lorenz, Bernd Ingo Thaddeus

(57) **Abstract**

A system and apparatus for a flexible microwave package system is provided. The flexible microwave package system includes a front panel having a first sealing edge and an opposite second sealing edge and formed of at least a first outer layer adjacent an exterior of the flexible package. The system also includes a back panel having a first sealing edge and an opposite second sealing edge and formed of a perforated layer adjacent an interior of the flexible microwave package, an outer layer adjacent an exterior of the flexible package, and an absorbent layer extending from the first sealing edge to the second sealing edge between the perforated layer and the outer layer. The absorbent layer includes a layer of a nonwoven material. Adjacent edges of the front panel and the back panel are sealed together. Each layer contacts an adjacent layer without an intervening metallic layer.

## Description

### BACKGROUND OF THE INVENTION

The field of the invention relates generally to microwave packaging, and more specifically, to a flexible, laminate microwave package having a moisture and/or lipid absorbing layer for at least partially reducing moisture and/or lipids in a flexible microwave package during a heating process to facilitate crisper food items within the package.

To prepare a heated food, the microwave packaging, together with the food contained in it, has microwave energy applied to it in a microwave oven. At least some of the moisture that is generated from within the food item during the microwave cooking process tends to condense on the food item in the package or otherwise cause the food item to be wetted. Additionally, some food items may contain lipids or fats that tend to liquefy during heating. If the liquefied fats puddle in the package, the food item may be at least partially soaked in grease. Thus, breaded or bread food items will not be crisp, but rather will become soggy. For example, the preparation of fatty/greasy food items like bacon or french fries can be difficult in known microwave packages because liquefied grease or oils may pool in the bottom of the package making the items soggy. Accordingly, with existing technologies, certain food items cannot be readily prepared in a microwave oven. For example, frozen breaded food items and fat containing items that are cooked within a microwave oven typically result in the food item being soggy or grease soaked.

At least some known microwave packages attempt to improve heating of food in a microwave oven by including a metal grid layer in the laminate forming the sidewall of the packaging and/or by including a pad for absorbing at least some of the moisture generated during cooking.

The metal grid reflects at least some of the microwave energy to facilitate controlling heating of the food item, which in turn controls the liberation of moisture from the food item during heating.

The absorption of moisture is addressed by adding an absorbent pad to the package along with the food item, for example, a microwave packaging that has an absorbent insert underneath the food. The absorbent insert is intended to absorb liquid that drips off and thus regulates the moisture content within the packing to a certain extent. Because the insert covers only a small region of the surface underneath the food, condensation of liquid on the other inner surface of the packaging as well as on the outside of the packaging cannot be avoided. For example, moisture can also condense above the food and drip onto the food. Moreover, loose moisture pads are able to stick to the food item after preparation and may be at least partially consumed by the user. The pads are also less convenient, requiring additional handling, and have a negative aesthetic. Accordingly, these known absorbent pads fail to adequately address the problem of moisture absorption within a microwave cooking package during heating in a microwave oven. Packages comprising pads are disclosed in US 2010/047405 A1, US 4 865 854, US 4 873 101, US 4 935 276, US 5 041 325, US 5 093 176, US 5 820 953 and US 7 732 036. US 4 861 632 describes a laminated packaging material from which package type containers are fabricated for storing or transporting a variety of products ranging from dry foodstuffs to electronic equipment where maintenance of a dry environment is required, comprising an outer imperforated water impervious layer, a middle layer of absorbent material and an inner perforated moisture impervious layer. The middle layer of absorbent material ends in a distance to the edges, so that the different layers must be precisely positioned with respect to each other during the manufacturing process. The packaging material is not provided for the use in a microwave oven.

Accordingly, it would be desirous to have a flexible laminate microwave package that includes a moisture absorbing layer for at least partially reducing moisture and/or lipids in the package during the microwave heating and/or cooking process to keep the heated food items crispy and more desirable to a consumer without the increased costs of a metal grid layer.

### BRIEF DESCRIPTION OF THE INVENTION

In one embodiment, a flexible microwave package system includes a front panel having a first sealing edge and an opposite second sealing edge and formed of at least a first outer layer adjacent an exterior of the flexible package. The system also includes a back panel having a first sealing edge and an opposite second sealing edge and formed of a perforated layer adjacent an interior of the flexible microwave package, an outer layer adjacent an exterior of the flexible package, and an absorbent layer extending from the first sealing edge to the second sealing edge between the perforated layer and the outer layer. The absorbent layer includes a layer of a nonwoven material. Adjacent edges of the front panel and the back panel are sealed together. Each layer contacts an adjacent layer without an intervening metallic layer.

In another embodiment, a microwave package formed of a flexible laminate includes an absorbent layer having hydrophilic properties, a reverse printed film covering an outer surface of the hydrophilic layer and forming an external surface of the package, the reverse printed film including at least one of polyester (PET), oriented polypropylene (OPP), oriented polyamide (OPA), and cellulose film, and a seal configured to join adjacent edges of the hydrophilic layer and the reverse printed PET film to define an interior volume of the package sealable from an exterior of the microwave package, where each layer contacts an adjacent layer without an intervening metallic layer.

In yet another embodiment, a microwave package formed of a flexible laminate wherein the package includes a foamed absorbent layer having hydrophilic properties, a reverse printed film covering an outer surface of the foamed hydrophilic layer and forming an external surface of the package the reverse printed film including at least one of polyester (PET), oriented polypropylene (OPP), oriented polyamide (OPA), and cellulose film, and a seal configured to join adjacent edges of the foamed hydrophilic layer and the reverse printed PET film to define an interior volume of the package sealable from an exterior of the microwave package, where each layer contacts an adjacent layer without an intervening metallic layer.

### BRIEF DESCRIPTION OF THE DRAWINGS

FIGS. 1-9B show exemplary embodiments of the system and apparatus described herein.
FIG. 1 is a cross-sectional view of a flexible package in accordance with an exemplary embodiment of the present invention;
FIG. 2 is an enlarged cross-sectional view of the flexible package shown in FIG. 1 in accordance with an exemplary embodiment of the present invention;
FIG. 3 is a side perspective view of the flexible package shown in FIG. 1 in accordance with another exemplary embodiment of the present invention;
FIG. 4 is a side cross-sectional view of the front panel shown in FIG. 1 in accordance with another exemplary embodiment of the present invention;
FIG. 5 is a side cross-sectional view of the front panel shown in FIG. 1 in accordance with another exemplary embodiment of the present invention;
FIG. 6 is a side cross-sectional view of the front panel shown in FIG. 1 in accordance with another exemplary embodiment of the present invention;
FIG. 7 is a side cross-sectional view of the front panel shown in FIG. 1 in accordance with another exemplary embodiment of the present invention;
FIG. 8 is a side cross-sectional view of a moisture absorbent microwave heating bag in accordance with an exemplary embodiment of the present invention;
FIG 9A is a gusset bag formed in accordance with an exemplary embodiment of the present invention; and
FIG. 9B illustrates an embodiment of the gusset bag shown in FIG. 9A including a closure mechanism such as a reclosable closure mechanism.

### DETAILED DESCRIPTION OF THE INVENTION

The following detailed description illustrates embodiments of the invention by way of example and not by way of limitation. It is contemplated that the invention has general application to embodiments of absorbing moisture in flexible microwave packages in industrial, commercial, and residential applications, such as, preheating industrial components and workpieces, sterilization and pasteurization processes, as well as home microwave food preparation.

As used herein, an element or step recited in the singular and preceded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

Embodiments of the present invention include a flexible microwave packaging that absorbs moisture that is generated during the microwave cooking process. For example, moisture containing foods tend to liberate some of that moisture into the package when heated in a microwave oven. Such moisture then wets the food item, making it soggy. Absorbing the moisture as it is generated in the package reduces or eliminates food items from getting soggy. Breaded or other food items stay crisp. The packaging is also capable of absorbing grease. This can be important for the preparation of fatty/greasy food items like bacon or French fries.

In one embodiment, the entire inner surface or most of the entire inner surface of the packaging has moisture-absorbent properties. Steam that has formed can be captured and bound in this manner, and thereby the condensation on both the inside of the microwave packaging and on the outside of the food is reduced. In this way, the outside of the food does not become soggy when it is heated.

In various embodiments, uniform package properties are used over the surface of the heat-sealable laminate from which the microwave packaging is formed, with regard to the absorption of moisture. Because the package does not use a susceptor, the moisture generated inside the package during heating is reduced. The residual moisture that still occurs is absorbed by the moisture-absorbent layer and thus does not impair the food. Accordingly, heating of the food product can be achieved without the food losing its crispiness.

Additionally, the absence of a susceptor layer also permits the microwave packaging described herein to be heated to a lower temperature as a whole. A susceptor that is exposed to microwave energy may heat up to temperatures of typically approximately 160°C to approximately 180°C, whereas, in accordance with embodiments of the present invention, the heating process is predominately by the formation of steam to directly heat the food, which is limited to a temperature range of about 100°C. Accordingly, lower temperature and lower cost films may be used to construct the packaging described herein, which also are more flexible than films that can withstand higher temperatures.

The flexible, heat-sealable laminate according to embodiments of the present invention includes layers having a polymer base substance. In various embodiments, the laminate includes layers of paper or paperboard and can be processed similar to usual packaging films, and preferably has corresponding layer thicknesses and weights per area unit. The laminate can be used in packaging and bag-shaping machines in which the laminate is drawn off a roll to form individual packaging units, for example, side-fold bags and other packages.

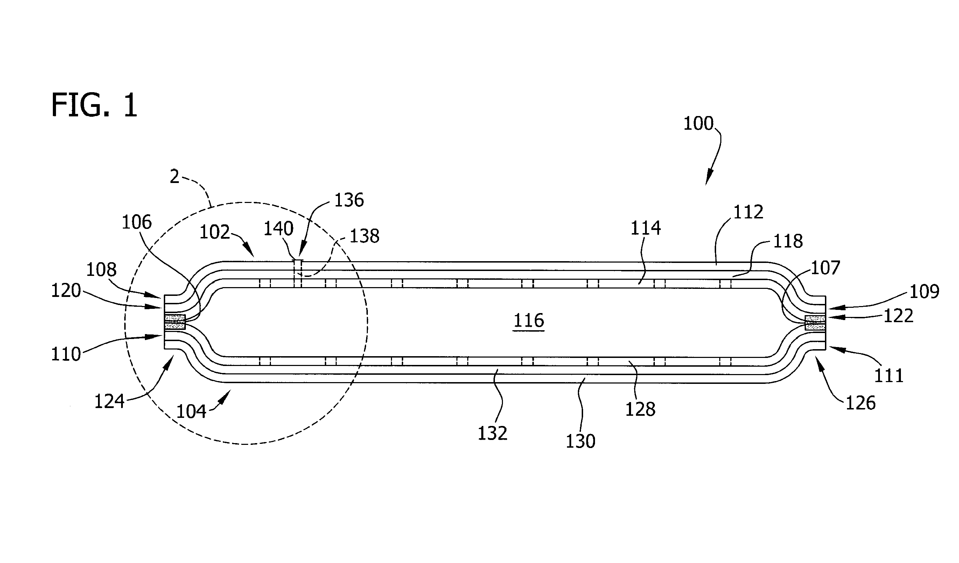

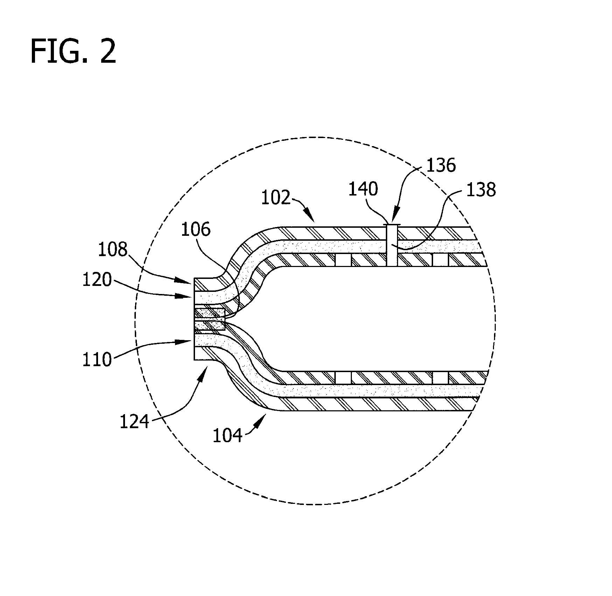

FIG. 1 is a cross-sectional view of a flexible package 100 in accordance with an exemplary embodiment of the present invention. FIG. 2 is an enlarged cross-sectional view of a portion of FIG. 1 indicated by reference numeral 2. In the exemplary embodiment, flexible package 100 includes a front panel 102, an opposing back panel 104, a seal 106 configured to couple edges 108 of front panel 102 to edges 110 of back panel 104, and a seal 107 configured to couple edges 109 of front panel 102 to edges 111 of back panel 104. Seals 106 and 107 may be formed by heating edges 108 and 110 using an external source of heat that melts a portion of layers 114 and 128 together to form seal 106 and by heating edges 109 and 111 similarly to form seal 107. In one embodiment, front panel 102 includes only an outer layer 112 formed of a film approximately 5.0 to approximately 100.0 µm thick. In various embodiments, the film includes at least one of polyester (PET), polypropylene (e.g. OPP), oriented polyamide (OPA), polyethylene and cellulose.

In various embodiments, front panel 102 includes an inner perforated sealant film 114. Moisture generated in an interior volume 116 of package 100 penetrates through perforated sealant film 114. In the exemplary embodiment, perforated sealant film 114 comprises polyethylene (PE), polypropylene (PP), copolymers of PE or PP or combinations thereof. The thickness of perforated sealant film 114 ranges from approximately 10.0 micrometers (µm) to approximately 200.0 µm. In various embodiments, perforated sealant film 114 is preferable in the range of approximately 30.0 µm to approximately 100.0 µm.

The moisture is absorbed by an absorbent layer 118. In the exemplary embodiment, absorbent layer 118 comprises a nonwoven material having a water absorption capacity of approximately 100.0 to approximately 5,000 milliliters per meter squared (ml/m²). In various embodiments, the nonwoven material includes hydrophilic properties, additives and/or coatings and comprises airlaid or spunbond nonwovens and/or super absorbent materials such as, but not limited to, super absorbent polymers (SAP). Absorbent layer 118 is at least partially laminated against perforated sealant film 114.

In the exemplary embodiment, moisture-absorbent layer 118 is formed from a nonwoven material, such as a spunbond or an airlaid nonwoven, and at least a portion of the fibers of the nonwoven are hydrophilic, and/or moisture-absorbent particles are embedded between the fibers. The moisture-absorbent layer preferably has a moisture-absorbent material including at least one of silica gel, calcium oxide, activated clay, and super-absorbent polymer or mixtures of at least two of these substances. Super-absorbent polymers may include polyarylate salts, carboxymethyl celluloses, and starch polymers, among others. In the case of a moisture-absorbent nonwoven, an increased accommodation capacity for moisture can also be achieved, additionally or alternatively, by means of a wetting agent that is mixed into the polymer when forming the nonwoven, or applied as a coating of the fibers. An embodiment in which the nonwoven is disposed, proceeding from the inside of the microwave packaging, behind a heat-sealable inner layer that permits the penetration of moisture. The fibers of the nonwoven allow sufficient laminate adhesion with the adjacent layers and also make available a volume for the moisture-absorbent particles. The nonwoven is at least particularly open-pored and also allows significant expansion of the absorbent particles due to the absorption of moisture.

Back panel 104 includes a first sealing edge 124 and an opposite second sealing edge 126 and is formed of a perforated layer 128 adjacent interior 116, an outer layer 130 adjacent an exterior of flexible package 100, and an absorbent layer 132 extending from first sealing edge 124 to second sealing edge 126 between perforated layer 128 and outer layer 130. In the exemplary embodiment, absorbent layer 132 comprises a layer of spunbond or airlaid nonwoven material. In one embodiment, front panel 102 and back panel 104 comprises a single panel that is includes a fold along one edge and sealed along opposite edges, such as edges 108 and 110, and edges 109 and 111.

In various embodiments, the laminate structure of front panel 102 and back panel 104 is formed into microwave cooking or heating package 100 having a steam release feature 136. In one embodiment, steam release feature 136 comprises a punched hole 138. In other embodiments, steam release feature 136 comprises a steam venting label or valve 140. Due to the flexible nature of package 100 formed of the laminate structure, convenience features, such as, steam venting label or valve 140, easy opening features, and reclosable features are more easily implemented in package 100.

In the exemplary embodiment, a susceptor is not used to increase the temperature generated in package 100 and specifically in the areas adjacent where a susceptor would be located. The absence of a susceptor limits the temperature generated in package 100, which tends to limit the generation of moisture and liquefied lipids within package 100 during heating. Elimination of the susceptor also permits using less costly and more flexible film materials in the construction of package 100.

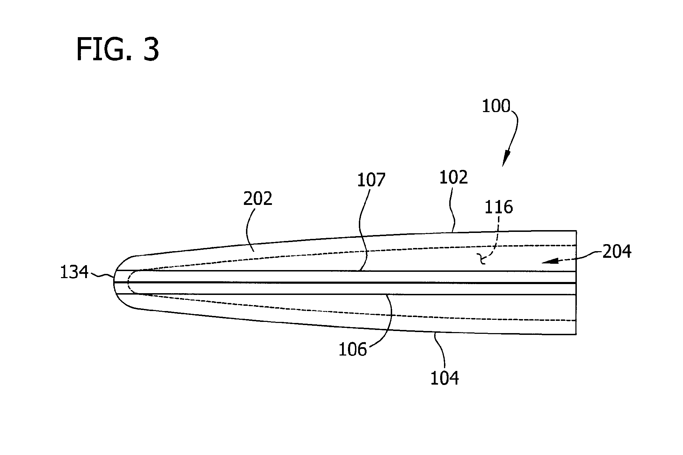

FIG. 3 is a perspective view of flexible package 100 (shown in FIG. 1) in accordance with an exemplary embodiment of the present invention. In the exemplary embodiment, flexible package 100 includes a single laminate panel 202 folded along fold 134 such that front panel 102 and back panel 104 are formed. Front panel 102 and back panel 104 are sealed along adjacent edges 108 and 110, and edges 109 and 111 using seals 106 and 107, respectively to form interior volume 116 and an opening 204. Opening 204, in various embodiments, is also sealed after filling flexible package 100 with a food item (not shown). Opening 204, in some embodiments is sealed with a resealable closure (not shown).

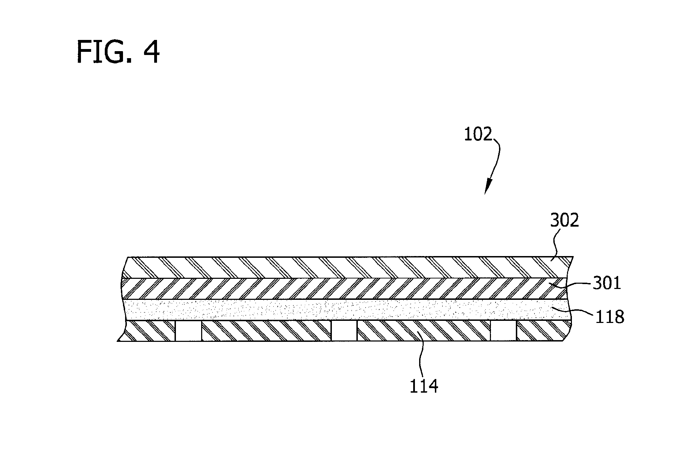

FIG. 4 is a side cross-sectional view of front panel 102 in accordance with another exemplary embodiment of the present invention. In one embodiment, back panel 104 is formed identically as front panel 102. In various embodiments, front panel 102 and back panel 104 are formed differently with respect to each other. In the exemplary embodiment, front panel 102 includes perforated sealant film 114, absorbent layer 118 at least partially adhered to perforated sealant film 114 using an adhesive, a tie layer 301 extrusion bonded to absorbent layer 118, and a reverse printed PET film 302 adhered to tie layer 301 using an adhesive. In the exemplary embodiment, perforated sealant film 114 comprises a PP film approximately 60.0 µm thick. In one embodiment, absorbent layer 118 comprises a spunbond nonwoven material having a grammage of approximately 50.0 to approximately 100.0 grams per square meter (gsm). Tie layer 301 comprises a PE film in the range of approximately 10.0 µm to approximately 50.0 µm thick, for example, approximately 22.0 µm thick. Reverse printed film 302 comprises a PET film approximately 12.0 µm thick.

Tie layer 301 is extrusion coated onto absorbent layer 118. Printed PET film 302 is glue laminated against the coated absorbent layer 118. Sealant film 114 is extruded and perforated and then the laminated and coated absorbent layer is glue laminated against perforated sealant film 114 to form front panel 102 and/or back panel 104. The perforation of the sealant film can be applied directly inline with the lamination against the coated absorbent layer.

The PE film of tie layer 301 is used to improve an appearance of the flexible package by smoothing the rough surface of the spunbond nonwoven material of absorbent layer 118.

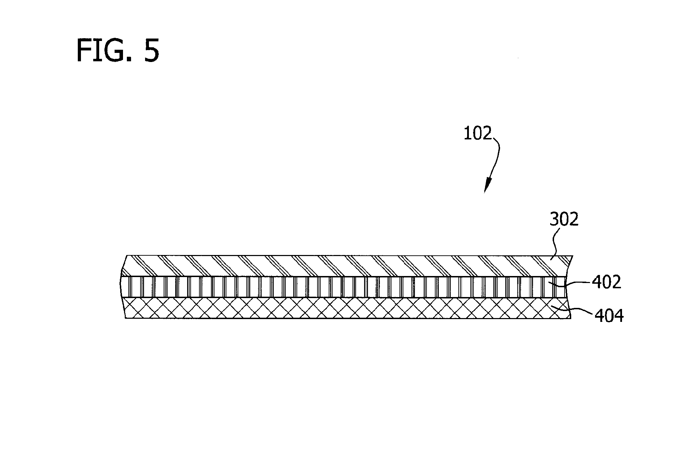

FIG. 5 is a side cross-sectional view of front panel 102 in accordance with another exemplary embodiment of the present invention. In one embodiment, back panel 104 is formed identically as front panel 102. In various embodiments, front panel 102 and back panel 104 are formed differently with respect to each other. In the exemplary embodiment, front panel 102 includes a sealant film 402, a hydrophilic coating 404, and reverse printed film 302. In the exemplary embodiment, hydrophilic coating 404, which may be edible, is directly applied onto sealant film 402. Sealant film 402 can be partially or totally coated with hydrophilic coating 404. To improve the bond strength between hydrophilic coating 404 and sealant film 402 (particularly when loaded with water) a primer can be applied first onto sealant film 402.

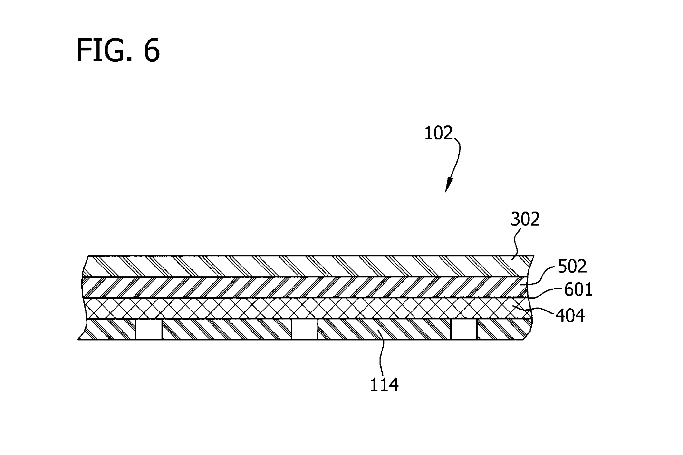

FIG. 6 is a side cross-sectional view of front panel 102 in accordance with another exemplary embodiment of the present invention. In one embodiment, back panel 104 is formed identically as front panel 102. In various embodiments, front panel 102 and back panel 104 are formed differently with respect to each other. In the exemplary embodiment, front panel 102 includes reverse printed film 302 adhered to a film layer 502 using an adhesive. Film layer 502 is formed of at least one of polyethylene (PE), polyamide (PA), polypropylene (PP), PET, or combinations thereof. Reverse printed film 302 is formed of at least one of polyester (PET), oriented polypropylene (OPP), oriented polyamide (OPA), and cellulose film. Hydrophilic coating 404 is applied onto film layer 502 using an adhesive coating 601. Hydrophilic coating 404 is covered by perforated sealant film 114, which is partially bonded (pattern lamination) to hydrophilic coating 404. Moisture liberated during heating of a food item penetrates through perforated sealant film 114 before it is absorbed by hydrophilic coating 404. Perforated sealant film 114 is used to minimize the possibility of hydrophilic coating 404 separating and mixing with the packed food item.

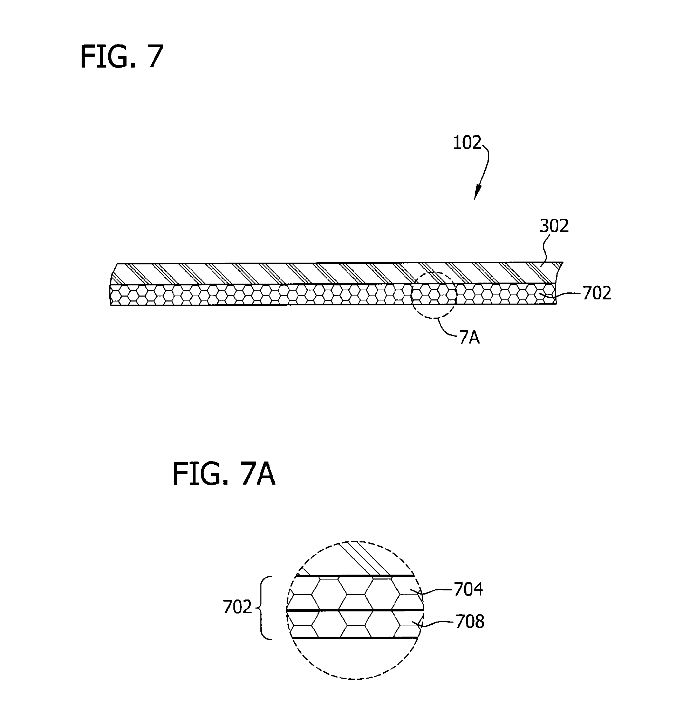

FIG. 7 is a side cross-sectional view of front panel 102 in accordance with another exemplary embodiment of the present invention. In one embodiment, back panel 104 is formed identically as front panel 102. In various embodiments, front panel 102 and back panel 104 are formed differently with respect to each other. In the exemplary embodiment, front panel 102 includes reverse printed film 302 formed of at least one of polyester (PET), oriented polypropylene (OPP), oriented polyamide (OPA), and cellulose film, and a foamed film polyethylene layer 702 adhered to film 302 using an adhesive. Film layer 702 is foamed and equipped with hydrophilic additives. The hydrophilic additives are able to absorb and bind various substances including, but not limited to, water vapor, lipids, oils, fats, grease, and combinations thereof. In various embodiments, the foaming can be achieved with chemical and physical foaming agents. In other embodiments, film layer 702 is a two-layer coextruded film that includes an unfoamed top layer 704 configured to be adhered to film 302, approximately 5.0 to approximately 30.0 µm thick, and a foamed sealing layer 708 approximately 50.0 to 150.0 µm thick. In one embodiment, a cell structure of the foam is open (open cell structure). In various other embodiments, the cell structure is closed. Various hydrophilic additives, for example, but not limited to, calcium oxide (CaO) and potassium hydroxide (KOH) can be used.

Although described herein with reference to front panel 102 and/or back panel 104 in FIG. 1, steam release feature 136 may be used with any of the embodiments of front panel 102 and back panel 104 described herein including steam release feature 136 being formed as punched hole 138 and/or steam venting label or valve 140.

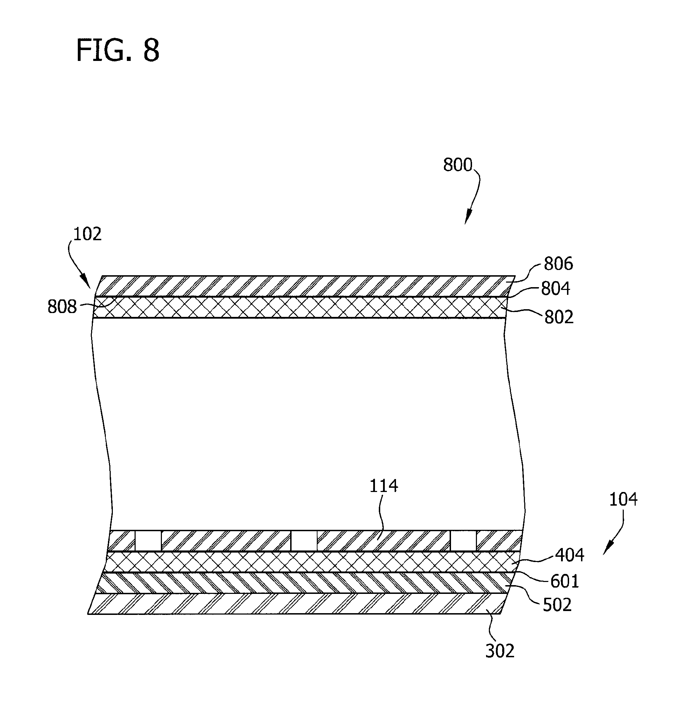

FIG. 8 is a side cross-sectional view of a moisture absorbent microwave heating bag 800 in accordance with an exemplary embodiment of the present invention. In the exemplary embodiment, back panel 104 is formed identically as back panel 104 as shown in FIG. 4. In the exemplary embodiment, front panel 102 includes a sealing layer 802 that is not perforated, an adhesive layer 804, and a reverse printed substrate layer 806. In one embodiment, substrate layer 806 is formed of PET film approximately 12 µm thick. Printing is performed on an inner surface 808 of substrate layer 806. In this embodiment, bag 800 includes absorbent layer 404, which may not appear aesthetically pleasing to consumers, only on the back side of bag 800. Front panel 102, which would be the side exposed to consumers while on the shelf, has a transparent or partially transparent appearance and may also include an amount of printing. Because front panel 102 presents a smooth surface, it may be more aesthetically pleasing for consumers. Adhesive layer 804 includes a polyurethane adhesive system, such as, but not limited to, a solventless two-component polyurethane adhesive system based on aliphatic or aromatic isocyanates.

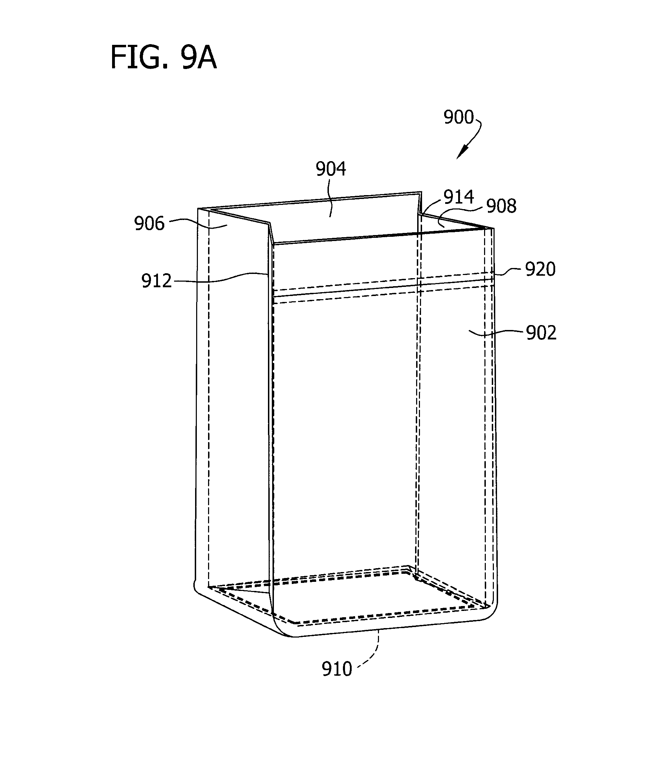

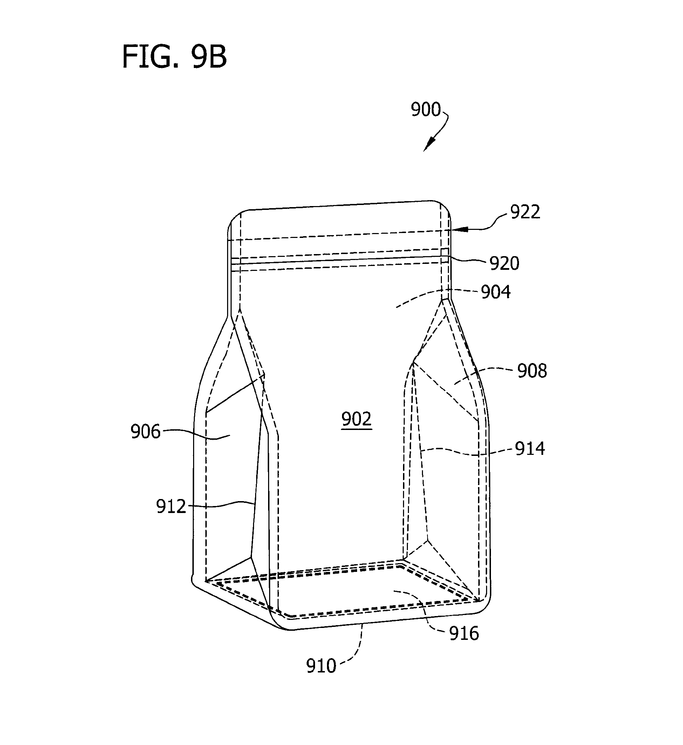

FIG 9A is a gusset bag 900 formed in accordance with an exemplary embodiment of the present invention. In the exemplary embodiment, gusset bag 900 includes a front panel 902 and back panel 904 and first and second sidewalls, 906 and 908 respectively, extending between front panel 902 and back panel 904. A bottom panel 910 couples to a bottom edge of each of front panel 902, back panel 904, sidewall 906, and sidewall 908. In the exemplary embodiment, sidewalls 906 and 908 include a pleat or fold 912 and 914 respectively that permits bag 900 to be folded flat or expanded to create a volume 916 within front panel 902, back panel 904, sidewall 906, sidewall 908, and bottom panel 910. In the exemplary embodiment, bottom panel 910 may be formed of various layers as described above with reference to FIGS. 4-8. FIG. 9B illustrates an embodiment of bag 900 including a closure mechanism 920 such as a reclosable closure mechanism. Closure mechanism 920 may further include a tamper-evident tear strip 922 incorporated into bag 900

The above-described embodiments of a system and apparatus for moisture absorbent flexible microwave packaging provides a cost-effective and reliable means for improving of food quality due to a reduction of surface sogginess of food items and enhancing the microwave preparation of ready-to-eat meals. More specifically, the system and apparatus described herein facilitate a moisture controlled microwave heating and/or cooking environment inside a microwavable package having flexible sides. As a result, the system and apparatus described herein facilitate a heating preparation of food items in a cost-effective and reliable manner.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A flexible microwave package system comprising:
a front panel comprising a first sealing edge and an opposite second sealing edge and formed of at least a first outer layer adjacent an exterior of said flexible package;
a back panel comprising a first sealing edge and an opposite second sealing edge and formed of a perforated layer adjacent an interior of said flexible microwave package, an outer layer adjacent an exterior of said flexible package, and an absorbent layer extending from said first sealing edge to said second sealing edge between said perforated layer and said outer layer, said absorbent layer comprising a layer of a nonwoven material; and
a seal between adjacent edges of said front panel and said back panel, where
each layer contacts an adjacent layer without an intervening metallic layer.

2. A system in accordance with Claim 1, wherein said front panel further comprises an inner perforated layer adjacent the interior of said flexible microwave package system and an absorbent layer extending between said front panel inner perforated layer and said first outer layer, said absorbent layer comprising a layer of nonwoven material.

3. A system in accordance with Claim 2, wherein at least one of said front panel absorbent layer and said back panel absorbent layer comprises a super absorbent material.

4. A system in accordance with Claim 3, wherein said super absorbent material comprises at least one of cross-linked polyacrylic acid, carboxy methyl cellulose, pectins or gelatins.

5. A system in accordance with one of the Claims 1 to 4, wherein said front panel comprises a printed layer adhesively coupled to said first outer layer.

6. A system in accordance with one of the Claims 1 to 5, wherein said flexible package comprises a pillow-type package and said seal comprises a heat-sealed seam.

7. A system in accordance with one of the Claims 1 to 6, wherein said flexible package comprises a gusset-type bag and said seal comprises a pleated sidewall.

8. A system in accordance with one of the Claims 1 to 7, wherein at least one of said front panel and said back panel comprises at least one of a foamed film, a film having an embossed surface, a film having a textured surface, and a film having a corrugated surface.

9. A system in accordance with one of the Claims 1 to 8, wherein said nonwoven material of said absorbent layer comprises at least one of a spunbond nonwoven material or airlaid nonwoven material.

10. A microwave package formed of a flexible laminate, said package comprising:
a front panel;
a back panel;
at least one of said front and said back panel comprising:
an absorbent layer having hydrophilic properties; and
a film layer covering an outer surface of said hydrophilic layer and forming an external surface of said package; and
a seal configured to join adjacent edges of said front panel to said back panel to define an interior volume of said package sealable from an exterior of said microwave package, where
each layer contacts an adjacent layer without an intervening metallic layer,
wherein said absorbent layer comprises a film at least partially coated with a hydrophilic coating.

11. A flexible package in accordance with Claim 10, wherein a thickness of said film is in the range of approximately 50.0 to approximately 100.0 micrometers (µm).

12. A flexible package in accordance with Claim 10 or 11, further comprising a perforated sealant film covering an inner surface of said absorbent layer and forming an internal surface of said package.

13. A microwave package formed of a flexible laminate, said package comprising:
a front panel;
a back panel;
at least one of said front and said back panel comprising:
a foamed absorbent layer having hydrophilic properties;
and
a film layer covering an outer surface of said foamed hydrophilic layer and forming an external surface of said package; and
a seal configured to join adjacent edges of said front panel to said back panel to define an interior volume of said package sealable from an exterior of said microwave package, where
each layer contacts an adjacent layer without an intervening metallic layer.

14. A microwave package in accordance with Claim 13, wherein said foamed absorbent layer comprises hydrophilic additives in a foamed film layer.

15. A microwave package in accordance with Claim 14, wherein said hydrophilic additives comprise at least one of calcium oxide (CaO) and potassium hydroxide (KOH).

16. A microwave package in accordance with one of the Claims 13 to 15, wherein said foamed absorbent layer is chemically foamed.

17. A microwave package in accordance with one of the Claims 13 to 16, wherein said foamed absorbent layer comprises on open cell foam structure.
